# EUROPÄISCHE PATENTSCHRIFT

(11) **EP 1 749 734 B1**
(45) Veröffentlichungstag und Bekanntmachung des Hinweises auf die Patenterteilung: **03.12.2008**
(21) Anmeldenummer: 05017168.5
(22) Anmeldetag: 06.08.2005
(51) Int. Cl.: B62D 53/08

(54) **Sattelkupplungsplatte mit Verschleissring**
Fifth wheel coupling plate with wear ring.
Plateau de sellette d'attirage avec anneau d'usure

(43) Veröffentlichungstag der Anmeldung: 07.02.2007
(73) Patentinhaber: Georg Fischer Verkehrstechnik GmbH, 78224 Singen (DE)
(72) Erfinder: Roth-Schuler, Christian, 78224 Singen (DE)
(74) Vertreter: Weiss, Wolfgang

(56) Entgegenhaltungen:
- EP-A- 0 616 939
- EP-A- 0 940 327
- DE-A1- 3 530 467
- DE-A1- 4 304 857

## Beschreibung

Die Erfindung bezieht sich auf eine Sattelkupplungsplatte mit einem Verschleissring umfassend einer Einführöffnung für einen Königszapfen, wobei der Verschleissring am Innenumfang der Einführöffnung angeordnet ist, wobei der Verschleissring aus zwei Teilen aus unterschiedlichen Werkstoffen ausgebildet ist, wobei der Verschleissring aus einem Innenring und einem zum Innenring passenden Aussenring ausgebildet ist und wobei der Innenring aus einem hochgleitfähigen Kunststoff und der Aussenring aus einem hochfesten Werkstoff ausgebildet sind.

Im Kraftfahrzeugbau werden Sattelkupplungen für die Verbindung von einem Zugfahrzeug mit einem Auflieger verwendet. Das Zugfahrzeug weist eine Kupplungsplatte mit einer Einführöffnung auf, in die der Königszapfen des Aufliegers eingeführt und kraftschlüssig gehalten werden kann. Das Gewicht des Aufliegers wird von der Kupplungsplatte getragen. Die Kupplungsplatte selbst ist um eine Achse parallel zur Strasse und quer zur Fahrtrichtung drehbar gelagert. Die Kupplung lässt auch Drehbewegungen um die Achse des Königszapfens zu. Beim Beschleunigen, Bremsen und während der Fahrt über unebenen Strassen ist die Kupplung neben diesen Drehbewegungen auch stark schwankende Stosskräfte ausgesetzt. Diese Stosskräfte werden von einem Verschleissring, der zwischen der Kupplungsplatte und dem Königszapfen angeordnet ist, aufgefangen.

Aus der EP 940 327 B1 ist ein verschleissfester Ring mit einem T-förmigen Querschnitt bekannt. Der Steg des T ist in einer Nut am Innenumfang der Einführöffnung in der halben Höhe der Kupplungsplatte angeordnet.

Aus der EP 616 939 A1 ist weiterhin eine Sattelkupplungsplatte bekannt, wobei in einer Abstufung am Innenumfang am Ende der Einführöffnung für den Königszapfen einen Verschleissring und eine Halteplatte befestigt sind. Der etwa hufeisenförmige Verschleissring ist aus Kunststoff und die Halteplatte ist aus Metall ausgebildet.

Ausgehend von diesem Stand der Technik ist es Aufgabe der Erfindung, eine Sattelkupplung mit einem Verschleissring anzugeben, die möglichst kostengünstig hergestellt werden kann, die möglichst einfach montiert und demontiert werden kann und die nach der Demontage möglichst einfach entsorgt werden kann.

Diese Aufgabe wird gelöst durch den Gegenstand des unabhängigen Patentanspruchs 1.

Bevorzugte Weiterbildungen der Erfindung ergeben sich aus den abhängigen Ansprüchen.

Es ist von Vorteil, dass der Verschleissring einfach und umweltgerecht entsorgt werden kann. Dies wird dadurch erreicht, dass der Verschleissring aus einem Innenring und einem Aussenring zusammengesetzt ist, die durch Formelemente zusammen gehalten werden.

Es ist auch von Vorteil, dass die Stosskräfte, die bei dem Aufsatteln und im Fahrbetrieb auf der Sattelkupplungsplatte einwirken, möglichst gut abgefangen werden. Dies wird dadurch erreicht, dass die Aussenfläche des Innenringes nach Aussen und die Innenfläche des Aussenringes nach Innen gewölbt ausgebildet sind. Dies wird auch dadurch erreicht, dass ein ringförmiger Vorsprung am Aussenring ausgebildet ist, der unterhalb der Mittellinie der Ringhöhe des Verschleissringes ausgebildet ist.

Es ist auch von Vorteil, dass der Verschleissring einfach und verdrehsicher in die Kupplungsplatte fixiert werden kann. Dies wird dadurch erreicht, dass am ringförmiger Vorsprung des Aussenringes kreisförmige Ausnehmungen ausgebildet sind, die zusammen mit weiteren Ausnehmungen an der Kupplungsplatte eine Aufnahme für Fixierstifte bilden.

Ein Ausführungsbeispiel der Erfindung wird anhand der Figuren beschrieben. Es zeigen:
Figur 1 eine Sicht auf einen erfindungsgemässen Verschleissring im Auslieferungszustand,
Figur 2 einen Schnitt durch eine Kupplungsplatte mit dem Verschleissring von Figur 1 und
Figur 3 eine perspektivische Sicht auf die zwei Teilen des Verschleissringes von Figur 1.

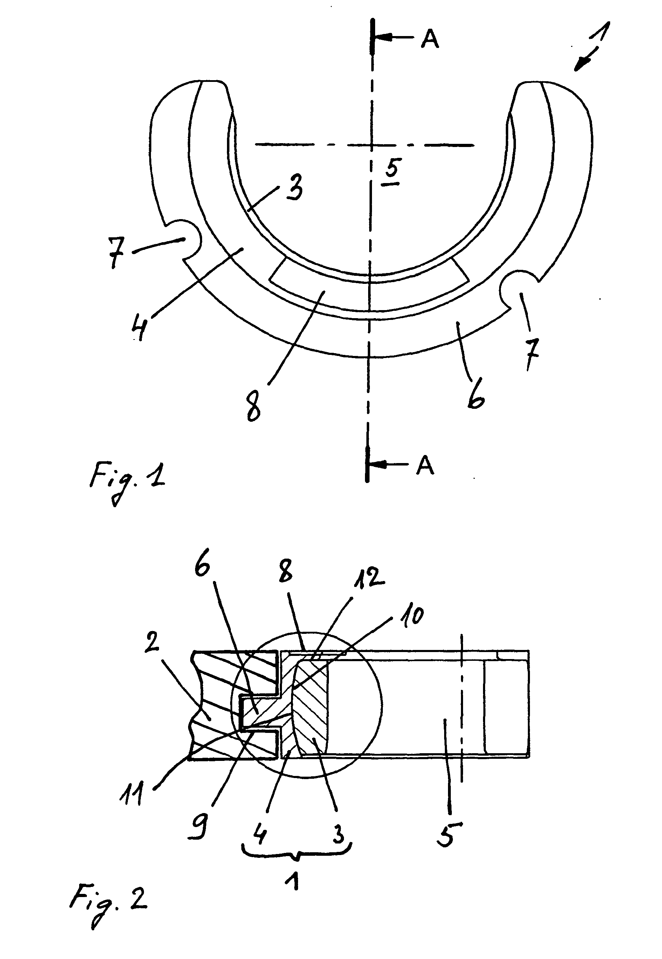

In Figur 1 ist ein Verschleissring 1 für eine Kupplungsplatte 2 im Auslieferungszustand gesehen von der Oberseite dargestellt. Der Verschleissring 1 wird in die Einführöffnung einer Kupplungsplatte 2, die in Figur 2 angedeutet ist, eingebracht und fixiert. Der Verschleissring 1 besteht aus zwei ringförmigen Teilen, einen Innenring 3 und einen Aussenring 4. In der kreisförmigen Öffnung 5 im Inneren des Innenringes 3 wird der Königszapfen des Anhängers einer Sattelschlepperkombination aufgenommen. Die Öffnung 5 des Innenringes 3 des Verschleissringes 1 umfasst mindestens einen halbkreisförmigen Bereich des Königszapfens.

In Figur 2 ist der Verschleissring 1 zusammen mit der Kupplungsplatte 2 geschnitten dargestellt. Die Höhe des Verschleissringes 1 ist gleich hoch wie die Dicke der Kupplungsplatte 2 im Bereich der Einführöffnung für den Königszapfen, so dass die Oberseite der Kupplungsplatte 2 bündig verlaufend mit der Oberseite des Verschleissringes angeordnet ist. Die Kupplungsplatte 2 weist im Bereich der Einführöffnung eine ringförmige Nut 9 auf. Am Aussenumfang des Aussenringes 4 ist ein ringförmiger Vorsprung 6 ausgebildet, der zur Nut 9 der Kupplungsplatte 2 passend ausgebildet ist. Der Aussenring 4 weist mit dem ringförmigen Vorsprung 6 ein annähernd T-förmiger Querschnitt auf, wobei jedoch der Fuss des T nicht symmetrisch angeordnet ist, sondern nach unten, unterhalb der Mittellinie der Höhe des Verschleissringes 1, versetzt angeordnet ist. Durch diese asymmetrische Ausführung wird verhindert dass der Verschleissring 1 verkehrt herum in die Kupplungsplatte 2 eingebaut wird. Ausserdem wird erreicht, dass die Kräfte, die im Fahrbetrieb von dem Königszapfen auf dem Verschleissring 1 eingeleitet werden, möglichst gut auf die Kupplungsplatte 2 abgeleitet werden.

Im ringförmigen Vorsprung 6 sind, wie in Figur 1 ersichtlich, kreisförmige Ausnehmungen 7 ausgebildet. Die Ausnehmungen 7 passen im eingebauten Zustand derart zusammen mit weiteren Ausnehmungen an der Kupplungsplatte 2, dass eine kreisrunde Öffnung für Fixierstifte oder Fixierbolzen gebildet werden. Die Fixierstifte sorgen auf einfache Art und Weise dafür, dass der Verschleissring 1 in der Kupplungsplatte 2 gegen Verdrehung gesichert wird.

In Figur 1 und Figur 2 ist eine Vertiefung 8 ersichtlich. Die Vertiefung 8 ist an der Oberseite des Aussenringes 4 ausgebildet und erstreckt sich über etwa ein Viertel bis ein Drittel des Umfanges des Verschleissringes 1. In der Vertiefung 8 können Beschriftungen oder Markierungen angebracht werden. Mit den Markierungen kann beispielsweise der Verschleiss des Verschleissringes 1 überwacht werden.

Der Innenring 3 weist eine Aussenfläche 10 auf, die nach aussen gewölbt ausgebildet ist. Der Aussenring 4 weist eine dazu passende Innenfläche 11 auf die nach innen gewölbt ausgebildet ist. Durch die Wölbung des Innenringes 3 und Aussenringes 4 wird ebenfalls erreicht, dass die Kräfte, die im Fahrbetrieb und beim Aufsatteln von dem Königszapfen auf dem Verschleissring 1 eingeleitet werden, möglichst gut auf die Kupplungsplatte 2 abgeleitet werden. Ausserdem wird ein guter Formschluss des Innenringes 3 in dem Aussenring 4 erreicht.

Im Bereich der Oberseite des Verschleissringes 1 weist des Aussenring 4 ein radial nach innen vorstehender Bereich 12 auf. Auch auf der Unterseite des Verschleissringes 1 kann ein identischer radial nach innen vorstehender Bereich ausgebildet sein. Der radial nach innen vorstehender Bereich 12 überdeckt, wie in Figur 1 ersichtlich, ein grosser Bereich der Ringfläche des Innenringes 3. Hierdurch wird der Innenring 3 im Aussenring besser an seinem Platz gehalten und bei Fehlkopplungsmanövern vor Beschädigung durch den Zugsattelzapfen geschützt. Der Innenring 3 besteht aus einem hoch gleitfähigen Kunststoff und der Aussenring ist aus einem hoch festen Werkstoff ausgebildet.

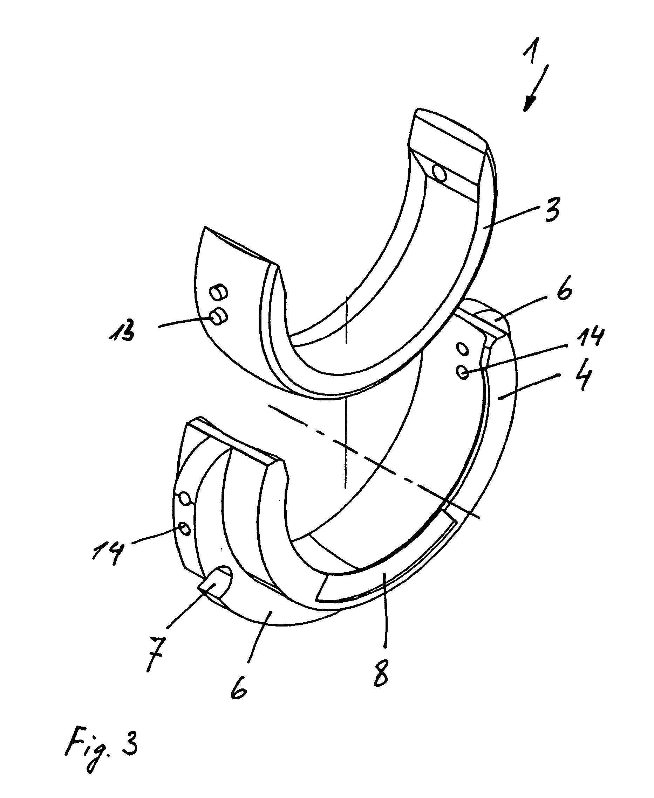

In Figur 3 sind der Innenring 3 aus Kunststoff und der Aussenring 4 aus Metall perspektivisch vor dem Zusammenbau dargestellt. Der Innenring 3 weist am Aussenumfang Zapfen 13 oder ähnliche Formteile auf, die zu Bohrungen 14 oder ähnliche Aufnahmen am Aussenring 4 passen. Durch die Zapfen 13 und Bohrungen 14 wird erreicht, dass der Innenring 3 verdrehsicher in dem Aussenring 4 eingesetzt werden kann. Der Innenring 3 aus Kunststoff kann mit den Zapfen 13 einfach in den Bohrungen 14 am Aussenring 4 eingerastet werden. Der Innenring 3 kann auch durch Einspritzen, Verstiften oder Einkleben mit dem Aussenring 4 verbunden werden.

## Patentansprüche

1. Sattelkupplungsplatte (2) mit einem Verschleissring (1) umfassend einer Einführöffnung (5) für einen Königszapfen, wobei der Verschleissring (1) am Innenumfang der Einführöffnung (5) angeordnet ist, wobei der Verschleissring (1) aus zwei Teilen (3,4) aus unterschiedlichen Werkstoffen ausgebildet ist, wobei der Verschleissring (1) aus einem Innenring (3) und einem zum Innenring (3) passenden Aussenring (4) ausgebildet ist und wobei der Innenring (3) aus einem hochgleitfähigen Kunststoff und der Aussenring (4) aus einem hochfesten Werkstoff ausgebildet sind, **dadurch gekennzeichnet, dass** die Aussenfläche (10) des Innenringes (3) nach aussen gewölbt ausgebildet ist und dass die Innenfläche (11) des Aussenringes (4) zur Wölbung des Innenringes (3) passend nach innen gewölbt ausgebildet ist.

2. Sattelkupplungsplatte mit einem Verschleissring (1) nach dem Anspruch 1, **dadurch gekennzeichnet, dass** der Innenring (3) Formelemente (13) aufweist, die mit Aufnahmen (14) am Aussenring (4) zusammenwirkend ausgebildet sind.

3. Sattelkupplungsplatte mit einem Verschleissring (1) nach mindestens einem der Ansprüche 1 oder 2, **dadurch gekennzeichnet, dass** der Innenring (3) durch Verklebung, Verstiftung oder Überspritzung formschlüssig mit dem Aussenring (4) verbunden ausgebildet ist.

4. Sattelkupplungsplatte mit einem Verschleissring (1) nach mindestens einem der Ansprüche 1 bis 3, **dadurch gekennzeichnet, dass** am Aussenring (4) zumindest im Bereich der Oberseite der Kupplungsplatte (2) ein radial nach innen vorstehender Bereich (12) ausgebildet ist.

5. Sattelkupplungsplatte mit einem Verschleissring (1) nach Ansruch 4, **dadurch gekennzeichnet, dass** der radial nach innen vorstehender Bereich (12) des Aussenringes der Ringfläche des Innenringes (3) grösstenteils überdeckend ausgebildet ist.

6. Sattelkupplungsplatte mit einem Verschleissring nach mindestens einem der Ansprüche 1 bis 5, **dadurch gekennzeichnet, dass** am radial nach innen vorstehender Bereich (12) des Aussenringes (4) eine Vertiefung (8) unterhalb der Oberfläche der Kupplungsplatte (2) aufweist.

7. Sattelkupplungsplatte mit einem Verschleissring (1) nach mindestens einem der Ansprüche 1 bis 6, **dadurch gekennzeichnet, dass** am Aussenumfang des Aussenringes (4) ein ringförmiger Vorsprung (6) ausgebildet ist.

8. Sattelkupplungsplatte mit einem Verschleissring (1) nach Ansruch 7, **dadurch gekennzeichnet, dass** der ringförmige Vorsprung (6) am Aussenumfang des Aussenringes (4) unterhalb der Mittellinie der Höhe des Verschleissringes (1) ausgebildet ist.

9. Sattelkupplungsplatte mit einem Verschleissring (1) nach mindestens einem der Ansprüche 7 oder 8, **dadurch gekennzeichnet, dass** am ringförmigen Vorsprung (6) in axialer Richtung gesehen kreisförmige Ausnehmungen (7) ausgebildet sind, die mit dazu passenden weiteren Ausnehmungen an der Kupplungsplatte (2) eine Aufnahme für Fixierstifte zwecks Verdrehsicherung des Verschleissringes (1) bilden.

## Claims

1. Fifth wheel coupling plate (2) with a wearing ring (1) comprising an insertion opening (5) for a kingpin, the wearing ring (1) being arranged on the inner circumference of the insertion opening (5), the wearing ring (1) being formed from two parts (3, 4) composed of different materials, the wearing ring (1) being formed from an inner ring (3) and an outer ring (4) designed to fit the inner ring (3) and the inner ring (3) being formed from a highly non-stick plastic and the outer ring (4) from a high-strength material, **characterized in that** the outer face (10) of the inner ring (3) is of convex shape and that the inner face (11) of the outer ring (4) is of concave shape matching the convexity of the inner ring (3).

2. Fifth wheel coupling plate with a wearing ring (1) according to Claim 1, **characterized in that** the inner ring (3) has shaped parts (13), which are designed to interact with locating seats (14) on the outer ring (4).

3. Fifth wheel coupling plate with a wearing ring (1) according to at least one of Claims 1 or 2, **characterized in that** the inner ring (3) is designed to be positively connected to the outer ring (4) through adhesive bonding, doweling or overspraying.

4. Fifth wheel coupling plate with a wearing ring (1) according to at least one of Claims 1 to 3, **characterized in that** an area (12) protruding radially inwards is formed on the outer ring (4), at last in the area of the upper side of the coupling plate (2).

5. Fifth wheel coupling plate with a wearing ring (1) according to Claim 4, **characterized in that** the area (12) of the outer ring protruding radially inwards is formed largely covering the annular surface of the inner ring (3).

6. Fifth wheel coupling plate with a wearing ring (1) according to at least one of Claims 1 to 5, **characterized in that** the area (12) of the outer ring (4) protruding radially inwards has a depression (8) below the surface of the coupling plate (2).

7. Fifth wheel coupling plate with a wearing ring (1) according to at least one of Claims 1 to 6, **characterized in that** an annular projection (6) is formed on the outer circumference of the outer ring (4).

8. Fifth wheel coupling plate with a wearing ring (1) according to Claim 7, **characterized in that** the annular projection (6) is formed on the outer circumference of the outer ring (4) below the centre line of the height of the wearing ring (1).

9. Fifth wheel coupling plate with a wearing ring (1) according to at least one of Claims 7 or 8, **characterized in that,** viewed in an axial direction, circular recesses (7), which with other matching recesses on the coupling plate (2) form a locating seat for fixing pins, are formed on the annular projection (6) for securing the wearing ring (1) against torsion.

## Revendications

1. Plateau de sellette d'attelage (2) avec un anneau d'usure (1) comprenant une ouverture d'introduction (5) pour un pivot central, dans lequel l'anneau d'usure (1) est disposé à la périphérie intérieure de l'ouverture d'introduction (5), dans lequel l'anneau d'usure (1) est formé de deux pièces (3, 4) en des matériaux différents, dans lequel l'anneau d'usure (1) est formé d'un anneau intérieur (3) et d'un anneau extérieur (4) s'ajustant sur l'anneau intérieur (3), et dans lequel l'anneau intérieur (3) est réalisé en une matière synthétique à glissance élevée et l'anneau extérieur (4) est réalisé en un matériau à haute résistance, **caractérisé en ce que** la surface extérieure (10) de l'anneau intérieur (3) est cintrée vers l'extérieur et la surface intérieure (11) de l'anneau extérieur (4) est cintrée vers l'intérieur en s'ajustant au cintrage de l'anneau intérieur (3).

2. Plateau de sellette d'attelage avec un anneau d'usure (1) selon la revendication 1, **caractérisé en ce que** l'anneau intérieur (3) comporte des éléments profilés (13), qui coopèrent avec des logements (14) formés sur l'anneau extérieur (4).

3. Plateau de sellette d'attelage avec un anneau d'usure (1) selon au moins une des revendications 1 ou 2, **caractérisé en ce que** l'anneau intérieur (3) est assemblé à l'anneau extérieur (4) par collage, brochage ou surmoulage par injection.

4. Plateau de sellette d'attelage avec un anneau d'usure (1) selon au moins une des revendications 1 à 3, **caractérisé en ce qu'**une zone (12) saillante radialement vers l'intérieur est formée sur l'anneau extérieur (4) dans la région du côté supérieur du plateau de sellette (2).

5. Plateau de sellette d'attelage avec un anneau d'usure (1) selon la revendication 4, **caractérisé en ce que** la zone (12) saillante radialement vers l'intérieur de l'anneau extérieur recouvre la plus grande partie de la surface annulaire de l'anneau intérieur (3).

6. Plateau de sellette d'attelage avec un anneau d'usure selon au moins une des revendications 1 à 5, **caractérisé en ce qu'**un creux (8) est formé sous la surface du plateau de sellette (2) sur la zone (12) saillante radialement vers l'intérieur de l'anneau extérieur (4).

7. Plateau de sellette d'attelage avec un anneau d'usure (1) selon au moins une des revendications 1 à 6, **caractérisé en ce qu'**une saillie annulaire (6) est formée sur la périphérie extérieure de l'anneau extérieur (4).

8. Plateau de sellette d'attelage avec un anneau d'usure (1) selon la revendication 7, **caractérisé en ce que** la saillie annulaire (6) est formée sur la périphérie extérieure de l'anneau extérieur (4) en dessous de la ligne centrale de la hauteur de l'anneau d'usure (1).

9. Plateau de sellette d'attelage avec un anneau d'usure (1) selon au moins une des revendications 7 ou 8, **caractérisé en ce que** des évidements circulaires (7) sont formés sur la saillie annulaire (6) en regardant dans la direction axiale, et forment avec d'autres évidements sur le plateau de sellette (2), en s'ajustant avec ceux-ci, un logement pour des broches de fixation en vue de bloquer la rotation de l'anneau d'usure (1).
